# EUROPEAN PATENT APPLICATION

(11) **EP 1 936 221 A2**
(43) Date of publication of application: **25.06.2008**
(21) Application number: 07021751.8
(22) Date of filing: 09.11.2007
(51) Int. Cl.: F16D 13/62, F16D 13/64

(54) **Friction clutch particularly for motorcycles**

(30) Priority: 19.12.2006 IT TO20060901
(71) Applicant: STRADA S.r.l., 10023 Chieri (TO) (IT)
(72) Inventor: Strada, Vito, 10023 Chieri (TO) (IT)
(74) Representative: Spandonari, Carlo

(57) **Abstract**

The friction clutch comprises a hub (12) and a drum (20) coaxial to the hub, a pack of clutch plates which are alternately linked to the drum (20) and to a clutch basket (23) surrounding the drum, and a plate-pushing cap (26) connected to rotate with the hub (12) and elastically biased to push the plates against the hub (12). An annular pressure surface of the hub (12) and/or of the plate-pushing cap (26) is lined by a ring (30) which is made of a material having a high resistance to wear, is insertable into an annular depression (34) formed on the annular pressure surface and having a substantially complementary profile, and is provided with at least two elastic restraint projections (37) at equally-spaced angular positions, which are insertable by snap action into respective undercuts (38) formed in the annular depression (34).

## Description

The present invention relates to friction clutch, particularly for motorcycles.

For a gradual transmission of the driving torque to the driveline, the friction clutches for motorcycles make use of two, mutually linked packs of clutch plates which are respectively connected to the driving shaft and to the driveline and are elastically sandwitched between a hub and a pressure member, which are both made of aluminum and are disengageable by manual control.

It is known to line the annular surfaces through which the pressure member and the hub engage the clutch plates, by means of respective rings which are made of a hard steel and are attached by screws.

A lining process is also known, which consists of spraying a dust made of a hard steel on the friction surfaces, and then sintering by burning. However, the high temperatures of the sintering process are liable to distort the aluminum and to alter its properties, thereby affecting the correct operation of the clutch.

It is now a main object of the present invention to provide a lining for the annular pressure surfaces of the pressure member, which overcomes the above-mentioned drawbacks of the prior art, and in particular which does not affect the operation of the friction.

The above object and other aims and advantages, which will better appear below, are achieved by the friction clutch having the feature recited in claim 1, while the other claims state other advantageous, though secondary, features of the invention.

The invention will be now described in more detail, with reference to a preferred, non-exclusive embodiment, shown by way of non-limiting example in the attached drawings, wherein:

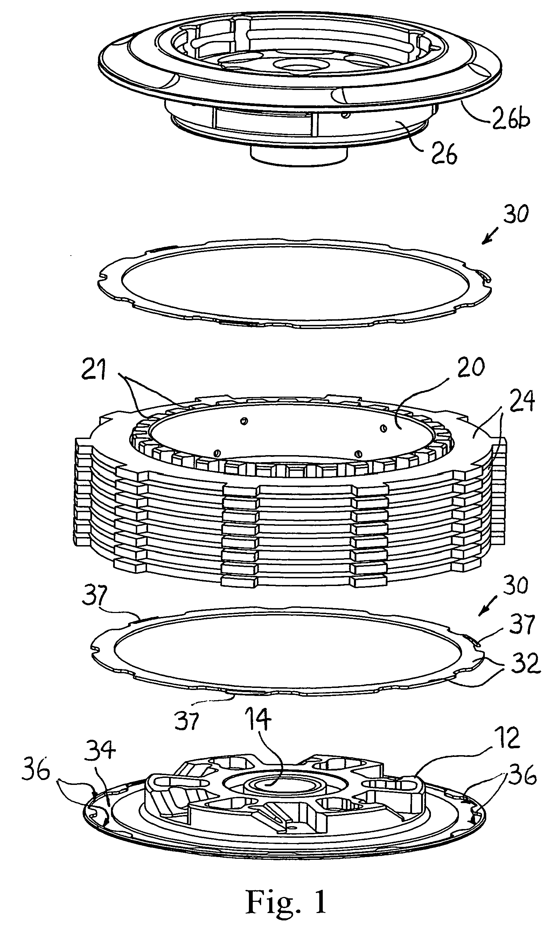

Fig. 1 is an exploded, perspective view of a friction clutch according to the invention;
Fig. 2 is a view in axial cross-section of the friction clutch of Fig. 1, in an assembled configuration;
Fig. 3 is a plan view of a detail of the friction clutch of Fig. 1;
Fig. 4 is a view in cross-section made along line IV-IV of Fig. 3.

With reference to the above Figures, a general friction clutch comprises a hub 12 having an axial, cylindrical seat 14 for being keyed, in a way known per se, on a driven shaft connected to the driveline of a vehicle (not shown).

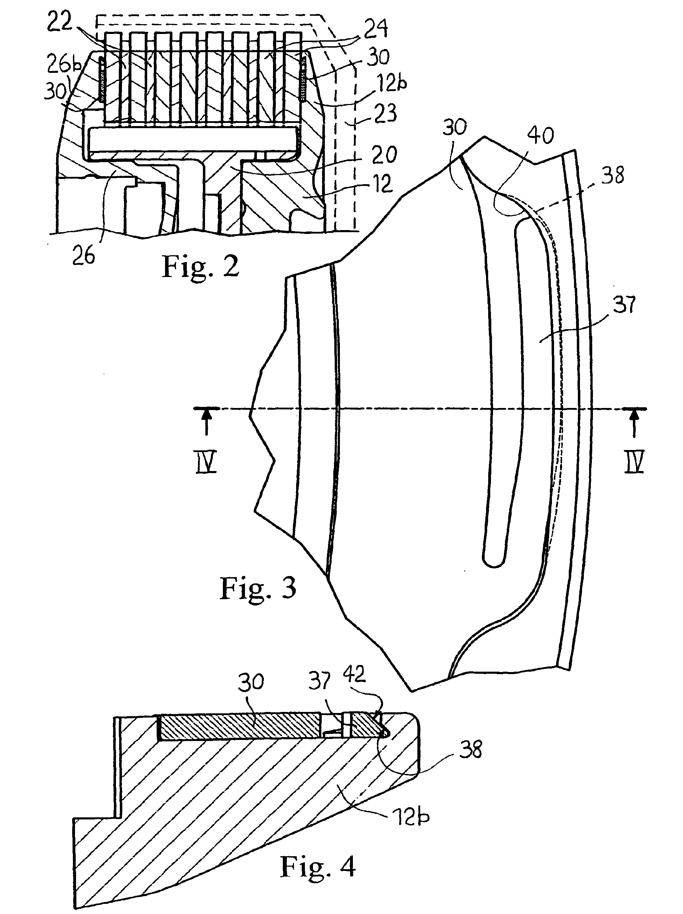

A drum 20 is supported coaxial to hub 12 and has longitudinal grooves 21 formed on its outer surface, by which it engages respective inner toothings of a first set of friction plates 22 (Fig. 2). A clutch basket 23 (which is diagrammatically shown in dotted lines in Fig. 2) is pivotally supported about the hub and the drum, is connectable to a crankshaft, and has grooves for engaging a second set of clutch plates 24 which are alternately arranged with respect to the first plates, thereby forming a pack of plates which are alternately linked to drum 20 and to the clutch basket.

The pack of plates is axially clamped between a flange 12b of the hub and a pressure member, which consists of a plate-pushing cap 26 having a peripheral abutment 26b. The cap is elastically biased against the pack of plates by springs (not shown), in a conventional way.

According to the invention, the annular pressure surfaces, through which flange 12b and peripheral abutment 26b engage the plates, are lined by respective wearproof inserts, each of which consists of a ring 30 made of a steel having a high resistance to wear, preferably a chromemolybdenum hardened harmonic steel (Cr-Mo). Each insert has an outer profile shaped with a radial toothing 32 for engaging an annular depression 34, which is formed on the annular surface and is shaped with recesses 36 having a profile complementary to toothing 32. Ring 30 has three elastic, restraint projections 37 which are equally-spaced on its outer periphery and are inserted by snap action into respective undercuts 38 formed in respective three of said recesses 40. With particular reference to Figs. 3, 4, the elastic projections 37 each consist of a thin elongated foil, which projects from the body of the ring in a circumferential direction and has an outer, tapered peripheral edge 42 insertable into the undercut 38 of the respective recess 40. The inner profile of the undercut is correspondingly tapered.

In use, ring 30 is positioned on the respective annular depression 34, with its toothing 32 and its restraint projections 37 aligned to the respective seats. Then, restraint projections 37 are radially pushed, thereby causing them to engage the undercuts 38 by snap action.

A preferred embodiment of the invention has been described herein, but of course many changes may be made by a person skilled in the art within the scope of the inventive concept. For instance, the toothing and the restraint projections could be formed on the inner periphery of the ring rather than on the outer periphery, as described above. Moreover, the elastic restraint projections could have a profile different from what shown, e.g., a rectilinear profile projecting tangentially from the periphery of the ring, provided that they are elastically yelding in a radial direction to engage the undercuts by snap action. Of course, the number of teeth and of elastic restraint projections could be different from what shown in the Figures, for instance, four or five projections could be provided. Furthermore, it could be sufficient only one annular insert applied either on the drum or on the hub, e.g., when the other part is already made of a material having a high resistance to wear.

## Claims

1. A friction clutch, comprising a hub (12) and a drum (20) coaxial to the hub, a pack of clutch plates which are alternately linked to the drum (20) and to a clutch basket (23) which coaxially surrounds the drum, and a plate-pushing cap (26) which is connected to rotate with the hub (12) and has an annular pressure surface (26b) through which it is elastically biased to push the plates in an axial direction against an opposite, annular pressure surface (12b) of the hub (12), **characterized in that** at least one of said annular pressure surfaces of the hub (12) and of the plate-pushing cap (26) is lined by a ring (30) which is made of a material having a high resistance to wear, is insertable into an annular depression (34) formed on the annular pressure surface and having a substantially complementary profile, and is provided with at least two elastic restraint projections (37) at equally-spaced angular positions, which are insertable by snap action into respective undercuts (38) formed on said annular depression (34).

2. The friction clutch of claim 1, **characterized in that** said elastic restraint projections (37) are formed on the outer periphery of the ring (30).

3. The friction clutch of claim 2, **characterized in that** said elastic restraint projections (37) each consist of a thin elongated foil extending from the outer periphery of the ring in a circumferential direction.

4. The friction clutch of claim 3, **characterized in that** said foil has an outer, tapered peripheral edge (42) insertable into said undercut (38).

5. The friction clutch of claim 4, **characterized in that** the inner surface of said undercut (38), which is engaged by said tapered peripheral edge (42), is also correspondingly tapered.

6. The friction clutch of any of claims 3 to 5, **characterized in that** said annular depression (34) has recesses (40) into which said elastic restraint projections (37) are received, said undercuts (38) being formed on the outer periphery of the recesses (40).

7. The friction clutch of any of claims 1 to 6, **characterized in that** said ring (30) has a radial toothing (32).

8. The friction clutch of claim 7, **characterized in that** said radial toothing (32) is formed on the outer periphery of the ring (30).

9. The friction clutch of claim 1, **characterized in that** said material having a high resistance to wear is a chromemolybdenum hardened harmonic steel (Cr-Mo).
